# EUROPÄISCHE PATENTSCHRIFT

(11) **EP 1 945 965 B1**
(45) Veröffentlichungstag und Bekanntmachung des Hinweises auf die Patenterteilung: **11.07.2012**
(21) Anmeldenummer: 06806664.6
(22) Anmeldetag: 02.11.2006
(51) Int. Cl.: F16D 65/097

(54) **HALTERUNG FÜR DIE BREMSBELÄGE EINER SCHEIBENBREMSE UND BREMSBELAG**
HOLDING DEVICE FOR THE BRAKE LININGS OF A DISC BRAKE AND ASSOCIATED BRAKE LINING
FIXATION POUR LES GARNITURES DE FREIN D'UN FREIN A DISQUE ET GARNITURE DE FREIN

(30) Priorität: 03.11.2005 DE 102005052439
(43) Veröffentlichungstag der Anmeldung: 23.07.2008
(73) Patentinhaber: KNORR-BREMSE Systeme für Nutzfahrzeuge GmbH, 80809 München (DE)
(72) Erfinder: KLEMENT, Roland, 82407 Haunshofen (DE); FISCHER, Rudolf, 85435 Erding (DE); LINKE, Tobias, 61118 Bad Vilbel (DE)
(74) Vertreter: Mattusch, Gundula
(86) Internationale Anmeldenummer: PCT/EP2006/010517
(87) Internationale Veröffentlichungsnummer: WO 2007/051618

(56) Entgegenhaltungen:
- EP-A2- 1 375 952
- GB-A- 2 267 941
- JP-A- 11 201 199
- JP-A- 57 163 735
- JP-A- 2002 122 167
- JP-A- 2006 118 543
- US-A- 4 498 564

## Beschreibung

Die Erfindung betrifft eine Halterung für die Bremsbeläge einer Scheibenbremse nach dem Oberbegriff des Anspruchs 1 oder 2 und einen Bremsbelag nach dem Oberbegriff des Anspruchs 2.

Scheibenbremsen für Nutzfahrzeuge sind in verschiedensten Ausführungen bekannt. Die auf einen dem Haltebügel zugeordneten Bereich des Bremsbelages einwirkende Belaghaltefeder - siehe z.B. die WO 92/00465 A1 soll den Bremsbelag innerhalb des Bremsbelagschachtes fixieren und darüber hinaus sollen die unvermeidbaren Toleranzen ausgeglichen werden. Durch die Vorspannung wird der Bremsbelag in den Bremsbelagschacht hineingedrückt. Durch diese Anordnung sollen Klappergeräusche reduziert oder vollkommen ausgeschaltet werden. Diese Anordnung hat sich bestens bewährt, es wird jedoch noch als Nachteil empfunden, dass sich das Bremsmaterial aufgrund der unvermeidbaren Schwingungen in den Belagträger eingräbt. Diese ungewünschte Eigenschaft ist auf die Materialpaarung zurückzuführen.

Zum Stand der Technik werden noch die DE 10 2004 053 026 A1, die EP 1 441 141 B1, die DE 38 39 957 A1, die DE 1 425 232 A und die US 4,498,564 genannt.

JP 1120 1199 offenbart eine Bremsbelaghalterung gemäß dem Oberbegriff des Anspruchs 1.

Der Erfindung liegt die Aufgabe zugrunde, das vorstehend beschriebene Problem mit einfachen konstruktiven Mitteln zu beheben.

Diese Aufgabe wird durch die Bremsbelaghalterung des Anspruchs 1 und den Bremsbelag des Anspruchs 3 gelöst. Danach sind an jedem Bremsbelag neben der Belaghaltefeder ferner mindestens zwei auf seine Umfangsfläche zumindest abschnittsweise eine Druckkraft ausübende Belagumlauffedern angeordnet, die derart ausgestaltet sind, dass sie jeweils einen Randbereich des Bremsbelagträgers überdecken, der zumindest zwei Eckbereiche E1 und E2 bzw. E3 und E4 des Bremsbelages umfasst. Bei einem Belagträger, der im Wesentlichen nur vier Eckbereiche E1, E2, E3 und E4 aufweist, sind entsprechend besonders bevorzugt alle vier Eckbereiche von der wenigstens einen oder den zwei oder mehr Belagumlauffedern eingefasst. Eine derartige Ausgestaltung mit zwei Belagumlauffedern und der Belaghaltefeder ist aus dem Stand der Technik nicht bekannt.

Vorzugsweise ist damit an jedem Bremsbelag mindestens eine auf seine Umfangsfläche zumindest abschnittsweise - in montierter Stellung in der Bremse - eine Druckkraft ausübende Belagumlauffeder angeordnet. Die eine oder mehreren Belagumlauffeder(n) kann ein- oder mehrstückig ausgebildet sein.

Unter Belagumlauffeder ist danach nicht zwingend eine solche Feder zu verstehen, die vollständig oder gar einstückig um den Bremsbelagträger um 360° umläuft. Insbesondere soll jede Belagumlauffeder vorzugsweise wenigstens zwei der Belagträger einfassen. Vorzugsweise sollen die Belaghaltefeder und die Belagumlauffedern "im Wesentlichen" um den Belagträger umlaufen, d.h., sie soll(en) mehr als die Hälfte des Randbereiches der Belagträger abdecken.

Vorzugsweise besteht die Belagumlauffeder aus einem Material mit einer relativ hohen Härte, insbesondere Stahl, wodurch der Effekt des Eingrabens des Belagmaterials in den Belagträger weitgehend verringert wird.

Darüber hinaus wird auch der Abfall des Wirkungsgrades der Scheibenbremse über die Lebensdauer verringert.

Durch die Kombination aus Belaghaltefeder und der Belagumlauffeder wird eine optimierte federnde Lagerung im Bremsträgerschacht und/oder im Bremssattelschacht realisiert, wodurch der Verschleiß der relativ zueinander beweglichen Bauteile sowie das Geräuschverhalten verringert werden.

Damit es nicht zu einer Korrosion zwischen dem Bremsmaterial und dem Bremsträger bei längerem Stillstand eines Straßenfahrzeuges kommt, ist vorgesehen, dass die Belagumlauffeder aus einem korrosionsbeständigen Stahl, insbesondere Edelstahl, gefertigt ist.

Um eine optimale Wirkung zu erzielen, ist vorgesehen, dass die Belagumlauffeder sich mindestens an einer der beiden einander gegenüberliegenden, seitlichen Umfangsflächen und an einer der Belaghaltefeder gegenüberliegenden Umfangsfläche des Bremsbelages abstützt. Dabei bewirken die Bereiche der Belagumlauffeder, die sich an den kürzen, seitlichen Umfangsflächen abstützen, dass sich der Bremsbelag im Bremsbelagschacht seitlich federnd abstützt.

Die Federwirkung wird optimiert, wenn die den Umfangsflächen der Belagumlauffeder zugeordneten Bereiche wellenförmig gestaltet sind, so dass jeweils die mittleren Bereiche der Umfangsfläche von der Belagumlauffeder kontaktiert werden.

In einer alternativen Form ist jedoch vorgesehen, dass jedem Bremsbelag zwei Belagumlauffedern zugeordnet sind, die sich über die einander gegenüberliegenden seitlichen Umfangsflächen des Bremsbelages und über die beiden der Belaghaltefeder gegenüberliegenden äußeren und seitlichen Bereiche des Bremsbelags erstrecken. Dadurch wird eine materialsparende Ausführung erreicht.

Es ist jedoch auch möglich, dass dem Bremsbelag nur eine Belagumlauffeder zugeordnet ist, die sich über den Bereich außerhalb der Belaghaltefeder erstreckt. Auch bei dieser Ausführung sollten zumindest die mittleren Bereiche der einander gegenüberliegenden seitlichen Flächen des Bremsbelages von der Belaghaltefeder kontaktiert sein. Der der Belaghaltefeder gegenüberliegende Bereich kann so gestaltet sein, dass zumindest die seitlichen Bereiche von der Belagumlauffeder kontaktiert werden. Darüber hinaus ist es auch möglich, dass ausschließlich der mittlere Bereich der der Belaghaltefeder gegenüberliegenden Fläche von der Belagumlauffeder kontaktiert wird. Außerdem wäre es denkbar, dass sowohl die seitlichen Bereiche und der mittlere Bereich der der Belaghaltefeder gegenüberliegende Fläche des Bremsbelages von der Belagumlauffeder kontaktiert werden.

Alternativ ist es möglich, dass die Belaghaltefeder und die Belagumlauffeder als einstückiges Formteil ausgebildet sind. Diese Ausführung ermöglicht eine progressive Kennlinie für die Belaghaltefeder und dadurch eine lastabhängige Federung.

Es ist ferner vorgesehen, je nach Anforderung und umlaufender Strecke, dass die Belagumlauffeder oder die Belagumlauffedern formschlüssig an dem jeweiligen Bremsbelag festgelegt sind.

Bei einer Ausführung mit einer Belagumlauffeder können die der Belaghaltefeder zugeordneten Endbereiche nach außen abgewinkelt sein und oder eine abgewinkelte Lasche des Belagträgers hintergreifen.

Sofern die Ausführung mit zwei Belagumlauffedern ausgestattet ist, sind die der Belaghaltefeder zugewandten Enden ebenfalls nach außen abgewinkelt und hintergreifen die abgewinkelten Laschen des Belagträgers.

Die anderen, der Belaghaltefeder gegenüberliegenden Enden der Belagumlauffedern sind augenförmig gestaltet und greifen in Ausnehmungen bzw. in Einziehungen des Bremsbelages ein. Auch dadurch wird eine formschlüssige Festlegung erreicht.

In besonders vorteilhafter Weise ist jede Belagumlauffeder, bezogen auf den Querschnitt, als Flach- oder Blattfeder ausgebildet.

Anhand der beiliegenden Zeichnung wird die Erfindung anhand eines Ausführungsbeispiels näher erläutert. Es zeigt:

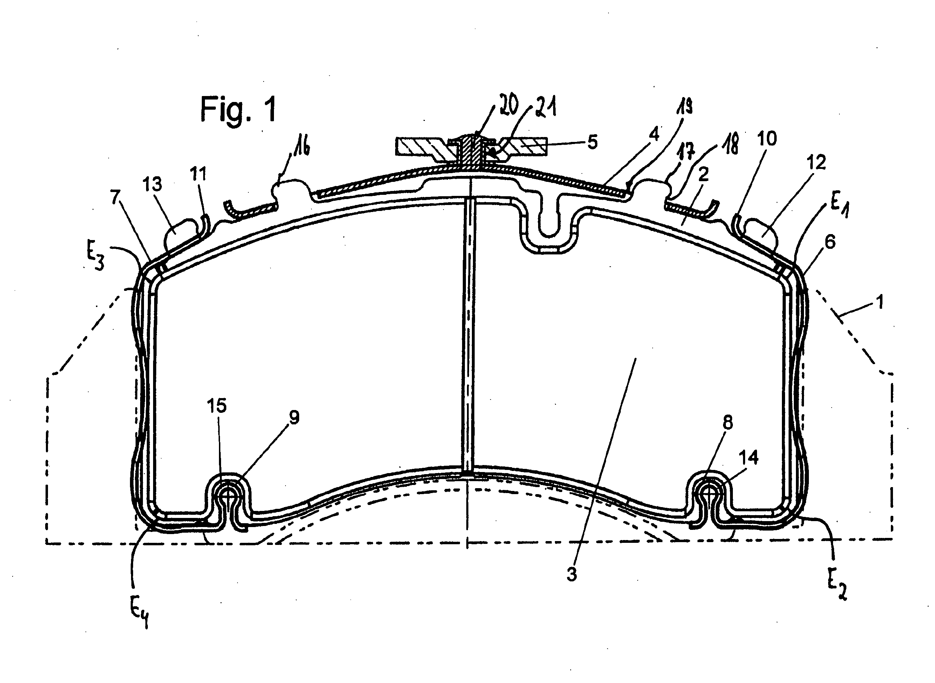

Figur 1 eine erfindungsgemäße Halterung für einen Bremsbelag im Aufriss.

Die in der Figur 1 dargestellte Anordnung wird in einen andeutungsweise dargestellten Bremsbelagschacht 1 eine Bremsträgers eingesetzt.

Die Anordnung enthält einen Bremsbelag, der einen Belagträger 2 aufweist, der ein Belagmaterial 3 trägt.

An dem Belagträger ist an seiner in montierter Stellung vom Bremsträger abgewandten Umfangsseite eine Belaghaltefeder 4 angeordnet, die als Blattfeder ausgebildet und an einem Haltebügel 5 angeordnet ist. Diese Belaghaltefeder 4 dient der Fixierung des Bremsbelages in dem Bremsbelagschacht 1 und darüber hinaus werden radiale Toleranzen ausgeglichen. Sie stellt einen Teil der Belagumlauffedern dar.

Im dargestellten Ausführungsbeispiel sind ferner an der Belagträger 2 zwei Belagumlauffedern 6, 7 eingesetzt, die zwischen dem Belagschacht und der Belagträger 2 liegen und Druckkräfte auf die Belagträger 2 ausüben. Diese Belagumlauffedern 6, 7 sind als Formfedern ausgebildet und wirken zumindest auf die einander gegenüberliegenden seitlichen Bereiche des Belagträgers und auf die der Belaghaltefeder 4 gegenüberliegende Seite, in den Randbereichen, wobei sie jeweils zwei Ecken E1 und E2 bzw. E3 und E4 des Bremsbelages einfassen. Insgesamt werden dann von der bzw. den Belagumlauffedern alle vier Eckbereiche E1, E2, E3, E4 des hier vier Eckbereiche aufweisenden Belagträgers eingefasst.

Wie Figur 1 zeigt, kontaktieren die Belagumlauffedern 6, 7 den Belagträger 2 nur abschnittsweise über einen bestimmten mittleren Bereich.

Die der Belaghaltefeder 4 zugeordneten Endbereiche der Belagumlauffedern 6, 7 sind nach außen abgewinkelt, so dass Stege 10, 11 entstehen. Diese Stege 10, 11 hintergreifen abgewinkelte Laschen 12, 13 des Belagträgers 2, wodurch die als Stege 10, 11 ausgebildeten Endbereiche formschlüssig mit dem Belagträger 2 verbunden.

Die Belagträger 2 weist ferner vorzugsweise Laschen 16, 17 auf, die zum Fixieren der Belaghaltefeder 4 dienen. Hier weisen die Laschen 16, 17 Hinterschnitte 18 auf, in denen die Belaghaltefeder 4 abspringgesichert in Aussparungsbereichen 19 gehalten ist.

Die anderen Endbereiche sind augenförmig gestaltet und üben Druckkräfte auf die der Belaghaltefeder 4 gegenüberliegenden Seite des Bremsbelages. Diese Augen 14, 15 greifen in Ausnehmungen 8, 9 oder Einziehungen des Bremsbelages vorzugsweise an seiner Unterseite bzw. an der von der Haltefeder abgewandten Seite ein. Durch die Kombination der Belaghaltefeder 4 mit den Belagumlauffedern 6, 7 wird durch die Schwingungserzeugung die Federung des Bremsbelages im Bremsbelagschacht 1 verstärkt, wodurch der Verschleiß der relativ zueinander beweglichen Bauteile sowie das Geräuschverhalten verringert wird.

Im Gegensatz zu der dargestellten Ausführung könnte die Anordnung auch mit einer Belagumlauffeder 6 oder 7 ausgestattet sein, die einstückig ist und den Bereich von den Enden der Belaghaltefeder 4 vollständig umschließt, wobei zumindest die seitlichen Bereiche im mittleren Bereich und die der Belaghaltefeder 4 gegenüberliegende Seite in den seitlichen Bereichen kontaktiert werden.

Alternativ ist es auch noch möglich, dass die Belaghaltefeder 4 und die Belagumlauffedern 6, 7 als einstückiges Formteil ausgebildet sind. Dadurch wird die Teilevielfalt verringert.

Jede Belagumlauffeder 6, 7 sollte aus einem relativ harten Material bestehen, da dadurch die Wirkung verstärkt wird.

Die Erfindung ist nicht auf das dargestellte Ausführungsbeispiel beschränkt. Wesentlich ist, dass in den Bremsbelagschacht 1 eine oder zwei Belagumlauffedern 6, 7 eingesetzt ist bzw. sind, die auf die von der Belaghaltefeder 4 nicht erfassten Flächen des Bremsbelages Druckkräfte ausübt bzw. ausüben. Es ist ferner zweckmäßig, dass jede Belagumlauffeder vorzugsweise aus einem Stahl mit einer relativ hohen Härte besteht und dass dieser korrosionsbeständig ist.

Wenigstens eine Belaghaltefeder 4 von einem von zwei Bremsbelägen einer Scheibenbremse greift mit einem Vorsprung 20 und/oder Stift in ein sich parallel zur Bremsscheibenachse (hier sich senkrecht zur Bildebene erstreckendes) Langloch 21 im Haltebügel 5 ein, in dem sie verschieblich geführt ist, so dass ergänzend eine Baueinheit aus dem Niederhaltebügel 5 und der Belaghaltefeder 4 geschaffen wir, was vorteilhaft ist, da die Belaghaltefeder 4 dadurch ergänzend geführt und gesichert ist.

## Patentansprüche

1. Bremsbelagalterung für eine Scheibenbremse eines Straßenfahrzeuges,
a. wobei die Scheibenbremse mit einem Bremssattel versehen ist, der mit Bremsbelagschächten versehen ist, in die jeweils ein Bremsbelag und gegebenenfalls eine Druckverteilerplatte eingesetzt ist,
b. wobei jeder Bremsebelag einen Belagträger (2) und ein Belagmaterial aufweist,
c. wobei ein Haltebügel (5) die zwei beidseitig einer Bremsscheibe einander gegenüberliegenden Bremsbeläge (2, 3) übergreift, und
d. bei der eine vorgespannte, an dem Haltebügel (5) sich abstützende, blattförmige Belaghaltefeder (4) auf die Umfangsfläche des Belagträgers (2) jedes Bremsbelages (2, 3) einwirkt,
**dadurch gekennzeichnet, dass**
e. an jedem Bremsbelag (2, 3) neben der Belaghaltefeder (4) ferner mindestens zwei auf die Umfangsfläche des Belagträgers (2) zumindest abschnittsweise eine Druckkraft ausübende Belagumlauffedern (6, 7) angeordnet sind,
f. die derart ausgestaltet sind, dass sie jeweils einen Randbereich des Bremsbelagträgers (2) überdecken bzw. einfassen, der zumindest zwei Eckbereiche E1 und E2 bzw. E3 und E4 des Bremsbelagträgers (2) umfasst.

2. Bremsbelaghalterung nach Anspruch 1,
**dadurch gekennzeichnet, dass** der Belagträger (2) im wesentlichen nur vier Eckbereiche (E1, E2, E3, E4) aufweist, die alle von wenigstens einer oder mehr Belagumlauffedern (6, 7) eingefasst sind.

3. Bremsbelag für eine Scheibenbremse eines Straßenfahrzeuges, der eine blattförmige Belaghaltefeder (4) aufweist, **dadurch gekennzeichnet, dass** der Belagträger (2) im wesentlichen vier Eckbereiche (E1, E2, E3, E4) auf-weist, die alle von der wenigstens einen oder den zwei oder mehr auf die Umfangsfläche des Belagträgers Zumindest abschnittsweise eine Druckkraft ausübende Belagumlauffedern (6, 7) eingefasst sind.

4. Bremsbelag nach Anspruch 3, **dadurch gekennzeichnet, dass** an jedem Bremsbelag (2, 3) neben der Belaghaltefeder (4) mindestens zwei der auf seine Umfangsfläche zumindest abschnittsweise eine Druckkraft ausübenden Belagumlauffedern (6, 7) angeordnet sind.

5. Bremsbelaghalterung oder Bremsbelag nach einem der vorstehenden Ansprüche, **dadurch gekennzeichnet, dass** die beiden Belagumlauffedern (6, 7) sich an den beiden einander gegenüberliegenden seitlichen Umfangsflächen und an der der Belaghaltefeder (4) gegenüberliegenden Umfangsfläche des Bremsbelages abstützt.

6. Bremsbelaghalterung oder Bremsbelag nach einem der vorstehenden Ansprüche 1 bis 3, **dadurch gekennzeichnet, dass** die Belagumlauffeder bzw. die Belagumlauffedern (6, 7) wellenförmig gestaltet sind und zumindest den mittleren Bereich der seitlichen Umfangsflächen des Bremsbelages kontaktieren.

7. Bremsbelaghalterung oder Bremsbelag nach einem oder mehreren der vorstehenden Ansprüche, **dadurch gekennzeichnet, dass** der Bremsbelag von zwei Belagumlauffedern (6, 7) umgeben ist, und dass die der Belaghaltefeder (4) gegenüberliegende Endbereiche der Belagumlauffeder (6, 7) die zugehörigen seitlichen Bereiche der Umfangsfläche des Bremsbelages umgreifen.

8. Bremsbelaghalterung oder Bremsbelag nach einem oder mehreren der vorstehenden Ansprüche, **dadurch gekennzeichnet, dass** die der Belaghaltefeder (4) zugeordneten Enden jeder Belagumlauffeder (6, 7) nach außen abgewinkelt sind und dass diese Stege (10, 11) abgewinkelte Laschen (12, 13) des Belagträgers (2) hintergreifen, und dass die anderen Endbereiche nach Art von Augen (14, 15) gestaltet sind und in der Belaghaltefeder (4) gegenüberliegende Ausnehmungen (8, 9) des Bremsbelages eingreifen.

9. Bremsbelaghalterung oder Bremsbelag nach einem oder mehreren der vorstehenden Ansprüche, **dadurch gekennzeichnet, dass** die Belaghaltefeder (4) und die Belagumlauffedern mehrstückig ausgebildet sind.

10. Bremsbelaghalterung oder Bremsbelag nach einem oder mehreren der vorstehenden Ansprüche, **dadurch gekennzeichnet, dass** die Belaghaltefeder (4) und die Belagumlauffedern als einstückiges Formteil ausgebildet sind.

11. Bremsbelaghalterung oder Bremsbelag nach einem oder mehreren der vorstehenden Ansprüche, **dadurch gekennzeichnet, dass** zumindest die einander gegenüberliegenden seitlichen Flächen des Bremsbelages im mittleren Bereich und die der Belaghaltefeder (4) gegenüberliegende Fläche des Bremsbelages bzw. der Belagträger in den seitlichen Bereichen und/oder im mittleren Bereich von der Belagumlauffeder kontaktiert ist.

12. Bremsbelaghalterung oder Bremsbelag nach einem oder mehreren der vorhergehenden Ansprüche, **dadurch gekennzeichnet, dass** jede Belagumlauffeder (6, 7), bezogen auf den Querschnitt, als Flach- oder Blattfeder ausgebildet ist.

13. Bremsbelaghalterung oder Bremsbelag nach einem oder mehreren der vorhergehenden Ansprüche 1 bis 10, **dadurch gekennzeichnet, dass** die Kennlinie progressiv ausgelegt ist und dadurch eine Lastabhängige Federung darstellt.

## Claims

1. A brake-lining holding device for a disc brake of a road vehicle,
a. the disc brake being provided with a brake calliper which is provided with brake-lining shafts into which a brake lining and optionally a pressure distribution plate is inserted in each case,
b. each brake lining having a lining carrier (2) and a lining material,
c. a retaining clip (5) straddling the two brake linings (2, 3) which are located opposite one another on both sides of a brake disc, and
d. in which a pre-stressed, leaf-shaped lining holding spring (4) which is supported on the retaining clip (5) acts on the peripheral surface of the lining carrier (2) of each brake lining (2, 3),
**characterised in that**
e. further at least two lining surround springs (6, 7) which exert a pressure force, at least in sections, on the peripheral surface of the lining carrier (2) are arranged on each brake lining (2, 3) in addition to the lining holding spring (4),
f. which springs are configured such that they cover or encompass in each case an edge region of the brake lining carrier (2) which comprises at least two corner regions E1 and E2 or E3 and E4 of the brake lining carrier (2).

2. A brake-lining holding device according to Claim 1, **characterised in that** the lining carrier (2) has substantially only four corner regions (E1, E2, E3, E4), which are all encompassed by at least one or more lining surround springs (6, 7).

3. A brake lining for a disc brake of a road vehicle, which has a leaf-shaped lining holding spring (4), **characterised in that** the lining carrier (2) has substantially four corner regions (E1, E2, E3, E4) which are all encompassed by the at least one or the two or more lining surround springs (6, 7) which exert a pressure force, at least in sections, on the peripheral surface of the lining carrier.

4. A brake lining according to Claim 3, **characterised in that** at least two of the lining surround springs (6, 7) which exert, at least in sections, a pressure force on its peripheral surface are arranged on each brake lining (2, 3) in addition to the lining holding spring (4).

5. A brake-lining holding device or brake lining according to one of the preceding claims, **characterised in that** the two lining surround springs (6, 7) are supported on the two lateral peripheral surfaces which are located opposite one another and on the peripheral surface of the brake lining which is located opposite the lining holding spring (4).

6. A brake-lining holding device or brake lining according to one of the preceding Claims 1 to 3, **characterised in that** the lining surround spring or the lining surround springs (6, 7) are of undulating form and make contact with at least the middle region of the lateral peripheral surfaces of the brake lining.

7. A brake-lining holding device or brake lining according to one or more of the preceding claims, **characterised in that** the brake lining is surrounded by two lining surround springs (6, 7), and **in that** the end regions of the lining surround spring (6, 7) which are located opposite the lining holding spring (4) engage around the associated lateral regions of the peripheral surface of the brake lining.

8. A brake-lining holding device or brake lining according to one or more of the preceding claims, **characterised in that** the ends of each lining surround spring (6, 7) which are associated with the lining holding spring (4) are angled outwards, and **in that** these webs (10, 11) engage behind angled tabs (12, 13) of the lining carrier (2), and **in that** the other end regions are configured in the manner of eyes (14, 15) and engage in recesses (8, 9) in the brake lining which are located opposite the lining holding spring (4).

9. A brake-lining holding device or brake lining according to one or more of the preceding claims, **characterised in that** the lining holding spring (4) and the lining surround springs are of multiple-piece configuration.

10. A brake-lining holding device or brake lining according to one or more of the preceding claims, **characterised in that** the lining holding spring (4) and the lining surround springs are formed as a one-piece shaped part.

11. A brake-lining holding device or brake lining according to one or more of the preceding claims, **characterised in that** at least the lateral surfaces of the brake lining which are located opposite one another are contacted in the middle region and the surface of the brake lining or the lining carriers located opposite the lining holding spring (4) is contacted in the lateral regions and/or in the middle region by the lining surround spring.

12. A brake-lining holding device or brake lining according to one or more of the preceding claims, **characterised in that** each lining surround spring (6, 7), relative to the cross-section, is formed as a flat spring or leaf spring.

13. A brake-lining holding device or brake lining according to one or more of the preceding Claims 1 to 10, **characterised in that** the characteristic curve is of progressive design and hence represents a load-dependent suspension.

## Revendications

1. Dispositif d'attache à fixer les garnitures de frein d'un frein à disque dans un véhicule routier,
a. dans lequel le frein à disque est pourvu d'un étrier de frein, dans lequel sont formés des cages de garniture de frein, dans lesquelles une garniture de frein respective et éventuellement une platine de distribution de pression est/sont insérée(s),
b. à chaque garniture de frein comprenant une flasque de garniture (2) et un matériau de garniture,
c. et à un étrier de retenue (5), qui chevauche deux garnitures de frein (2, 3) opposées l'une à l'autre des deux côtés d'un disque de frein, et
d. dans lequel un ressort en lame de retenue de garniture (4) en précontrainte, qui s'appuie audit étrier de retenue (5), agit sur la surface périphérique de ladite flasque de garniture (2) de chaque garniture de frein (2, 3),
**caractérisé en ce**
e. **qu'**au plus, à chaque garniture de frein (2, 3), du côté dudit ressort de retenue de garniture (4), au moins deux ressorts circonférentiels de garniture (6, 7) sont disposés, qui exercent, au moins en segments, un effort de pression sur ladite surface périphérique de ladite flasque de garniture (2),
f. qui sont configurés d'une telle façon, qu'ils recouvrent ou respectivement entourent une partie marginale respective de ladite flasque de garniture de frein (2), qui comprend au moins deux régions de coin E1 et E2 ou respectivement E3 et E4 de ladite flasque de garniture de frein (2).

2. Dispositif d'attache à fixer une garniture de frein selon la revendication 1, **caractérisé en ce que** ladite flasque de garniture (2) ne comprend essentiellement que quatre régions de coin (E1, E2, E3, E4), qui sont tous entourées par au moins un ou plus ressorts circonférentiels de garniture (6, 7).

3. Garniture de frein pour un frein à disque d'un véhicule routier, qui comprend un ressort en lame de retenue de garniture (4), **caractérisé en ce que** ladite flasque de garniture (2) comprend essentiellement quatre régions de coin (E1, E2, E3, E4), qui sont tous entourées par ledit au moins un ou par lesdits deux ou plus ressorts circonférentiels de garniture (6, 7), qui exercent un effort de pression sur la surface périphérique de ladite flasque de garniture au moins en segments.

4. Garniture de frein selon la revendication 3, **caractérisé en ce qu'**à chaque garniture de frein (2, 3), du côté dudit ressort de retenue de garniture (4), au moins deux desdits ressorts circonférentiels de garniture (6, 7), qui exercent un effort de pression sur la surface périphérique de ladite flasque de garniture au moins en segments.

5. Dispositif d'attache à fixer une garniture de frein ou garniture de frein selon une quelconque des revendications précédentes, **caractérisé en ce que** lesdits deux ressorts circonférentiels de garniture (6, 7) s'appuient aux deux surfaces périphériques latérales, qui sont opposées l'une à l'autre, et à ladite surface périphérique de ladite garniture de frein, qui est opposée audit ressort de retenue de garniture (4).

6. Dispositif d'attache à fixer une garniture de frein ou garniture de frein selon une quelconque des revendications précédentes 1 à 3, **caractérisé en ce que** ledit ressort circonférentiel de garniture ou respectivement lesdits ressorts circonférentiels de garniture (6, 7) sont configurés en une forme onduleuse et se trouvent en contact au moins avec la zone centrale des surface périphériques latérales de ladite garniture de frein.

7. Dispositif d'attache à fixer une garniture de frein ou garniture de frein selon une quelconque ou plusieurs des revendications précédentes, **caractérisé en ce que** ladite garniture de frein est entourée par deux ressorts circonférentiels de garniture (6, 7) et **en ce que** les régions terminales dudit ressort circonférentiel de garniture (6, 7), qui sont opposées audit ressort de retenue de garniture (4), chevauchent les régions latérales affectées de la surface périphérique de ladite garniture de frein.

8. Dispositif d'attache à fixer une garniture de frein ou garniture de frein selon une quelconque ou plusieurs des revendications précédentes, **caractérisé en ce que** les extrémités de chaque ressort circonférentiel de garniture (6, 7), qui sont affectées audit ressort de retenue de garniture (4), sont pliées vers l'extérieur, et **en ce que** ces entretoises (10, 11) se trouvent en prise à l'arrière des pattes pliées de ladite flasque de garniture (2), et **en ce que** les autres zones terminales sont configurées de façon des bossages (14, 15) et se trouvent en prise dans des évidements (8, 9) de ladite garniture de frein, qui sont opposés audit ressort de retenue de garniture (4).

9. Dispositif d'attache à fixer une garniture de frein ou garniture de frein selon une quelconque ou plusieurs des revendications précédentes, **caractérisé en ce que** ledit ressort de retenue de garniture (4) et lesdits ressort circonférentiels de garniture présentent une configuration en plusieurs parties.

10. Dispositif d'attache à fixer une garniture de frein ou garniture de frein selon une quelconque ou plusieurs des revendications précédentes, **caractérisé en ce que** ledit ressort de retenue de garniture (4) et lesdits ressorts circonférentiels de garniture présentent une configuration en une seule pièce moulée.

11. Dispositif d'attache à fixer une garniture de frein ou garniture de frein selon une quelconque ou plusieurs des revendications précédentes, **caractérisé en ce qu'**au moins les surfaces latérales de ladite garniture de frein, qui sont opposées l'une à l'autre, sont contactées dans la zone centrale par ledit ressort circonférentiel de garniture, et la surface de ladite garniture de frein, qui est opposée audit ressort de retenue de garniture (4), ou respectivement ladite flasque de garniture, est contactée dans les zones latérales et/ou dans la zone centrale par ledit ressort circonférentiel de garniture.

12. Dispositif d'attache à fixer une garniture de frein ou garniture de frein selon une quelconque ou plusieurs des revendications précédentes, **caractérisé en ce que** chaque ressort circonférentiel de garniture (6, 7) est configuré sous forme d'un ressort plat ou en lame, relativement à la coupe transversale.

13. Dispositif d'attache à fixer une garniture de frein ou garniture de frein selon une quelconque ou plusieurs des revendications précédentes 1 à 10, **caractérisé en ce que** la caractéristique est conçue en forme progressive, en représentant ainsi un système amortisseur en fonction de la charge.
